**Europäisches Patentamt**

(19) **European Patent Office**

**Office européen des brevets**

(11) Veröffentlichungsnummer: **0 126 273**

**B1**

(12) **EUROPÄISCHE PATENTSCHRIFT**

(45) Veröffentlichungstag der Patentschrift:
08.04.87

(51) Int. Cl.⁴: **G 01 L 7/12**

(21) Anmeldenummer: **84104082.7**

(22) Anmeldetag: **11.04.84**

(54) Barometer.

(30) Priorität: **26.04.83 DE 3315093**

(43) Veröffentlichungstag der Anmeldung:
**28.11.84 Patentblatt 84/48**

(45) Bekanntmachung des Hinweises auf die Patenterteilung:
**08.04.87 Patentblatt 87/15**

(84) Benannte Vertragsstaaten:
**AT CH DE FR GB IT LI NL**

(56) Entgegenhaltungen:
**DE-B-2 616 315**
**DE-B-2 812 755**
**US-A-4 050 314**

(73) Patentinhaber: **Dostmann GmbH & Co. KG, D-6980 Wertheim (DE)**

(72) Erfinder: **Marterer, Karl, Teilbacher Mühle 5, D-6980 Wertheim- Waldenhausen (DE)**

(74) Vertreter: **Grams, Klaus Dieter, Dipl.- Ing., Patentanwaltsbüro Tiedtke- Bühling- Kinne- Grupe- Pellmann- Grams- Struif Bavariaring 4, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung bezieht sich auf ein Barometer gemäß dem Oberbegriff von Patentanspruch 1.

Es sind als Aneroidbarometer bezeichnete Barometer mit Membrankapseln in zahlreichen verschiedenen Ausführungsformen bekannt. Die Membrankapsel dieser Barometer ist in der Regel auf ihrer einen Seite gerätefest angeordnet, so daß die Metallmembran auf der anderen Seite der Membrankapsel bei einer Luftdruckänderung eine entsprechende Bewegung ausführt. Diese translatorische Bewegung bzw. Auslenkung wird mittels eines Obertragungswerkes zu einem Zeiger auf einer Zeigerwelle übertragen, dessen Stellung über einem Ziffernblatt ablesbar ist. Das Übertragungswerk muß die kleinen Auslenkungen der Membrankapsel in einen großen Zeigerweg umwandeln und hat zu diesem Zweck ein grosses Übersetzungsverhältnis. Die Übertragungswerke bekannter Barometer umfassen in der Regel mehrere Hebel, die als einarmige Hebel, zweiarmige Hebel oder Winkelhebel ausgebildet sind, sowie als Kette, Faden oder Zahnsegment ausgebildete Elemente, die schließlich die Bewegungen vom Hebelmechanismus zur Zeigerwelle übertragen. Diese Übertragungswerke bestehen somit aus verhältnismäßig vielen Teilen, aufgrund derer der Herstellungs- und Montageaufwand groß ist.

Ferner ist auch ein Barometer gemäß dem Oberbegriff von Patentanspruch 1 bekannt (DE-AS 26 16 315), das ein bereits vereinfachtes Übertragungswerk aufweist. Bei diesem bekannten Barometer ist das schraubenförmige Element nach Art einer Schraubenfeder ausgebildet. Es ist koaxial zur Ausgangswelle auf der Membrankapsel angeordnet und nimmt an deren Auslenkung teil. Mit der Ausgangswelle wirkt das schraubenförmige Element durch einen von der Ausgangswelle radial vorstehenden Stift zusammen, der zwischen den Windungen des schraubenförmigen Elementes hindurchragt. Wenn bei der translatorischen Bewegung der Membrankapsel das schraubenförmige Element verlagert wird, zwingt es die Ausgangswelle, die axial gerätefest abgestützt ist, zu einer Drehung, die auch der einstückig mit der Ausgangswelle ausgebildeten Zeigerwelle erteilt wird. Obwohl das Übertragungswerk dieses bekannten Barometers bereits im Vergleich zu den einleitend beschriebenen Übertragungswerken geringeren Herstellungsaufwand erfordert, ist eine weitere Verringerung des Herstellungs- und Montageaufwandes erstrebenswert. Außerdem hat dieses bekannte Barometer den Nachteil, daß sein Übertragungswerk verhältnismäßig ungenau arbeitet.

Dem Anmeldungsgegenstand liegt die Aufgabe zugrunde, das gattungsgemäße Barometer derart auszubilden, daß es eine möglichst einfache Ausbildung des Übertragungswerkes aufweist.

Diese Aufgabe wird erfindungsgemäß dadurch gelöst, daß das schraubenförmige Element unbeweglich angeordnet ist, daß die Ausgangswelle außer verdrehbar auch axial verschiebbar ist und daß die Ausgangswelle mit ihrem der Membrankapsel zugewandten Ende an der Membrankapsel anliegt und von der Rückstellfeder in dieser Anlage gehalten wird.

Beim erfindungsgemäßen Barometer ist das schraubenförmige Element unbeweglich, das heißt gerätefest angeordnet, somit ist das einzige bewegliche Element des Übertragungswerkes die Ausgangswelle. Weil diese einerseits unmittelbar der translatorischen Bewegung der Membrankapsel folgt und andererseits auch die Drehung ausführt, entfällt beim erfindungsgemäßen Barometer die Notwendigkeit, die Ausgangswelle gegen Axialverschiebungen abzustützen und das schraubenförmige Element mit der Membrankapsel drehfest, aber axial verschiebbar zu verbinden; diese Notwendigkeit ist bei dem Barometer gemäß der DE-AS 26 16 315 gegeben. Das erfindungsgemäße Barometer ist demgegenüber erheblich vereinfacht.

In vorteilhafter Ausgestaltung kann vorgesehen sein, daß die Ausgangswelle und die Zeigerwelle einstückig miteinander ausgebildet sind, so daß praktisch die Zeigerwelle mit ihrem der Membrankapsel zugewandten Ende anliegt und das Übertragungswerk keine zusätzlichen drehbaren Teile erfordert.

Ein Ausführungsbeispiel der Erfindung ist in der Zeichnung dargestellt und wird im folgenden näher erläutert. Es zeigen:

Fig. 1 eine Seitenansicht einer Ausführungsform des erfindungsgemäßen Barometers; und

Fig. 2 eine vergrößerte Darstellung der Einzelheit A gemäß Fig. 1.

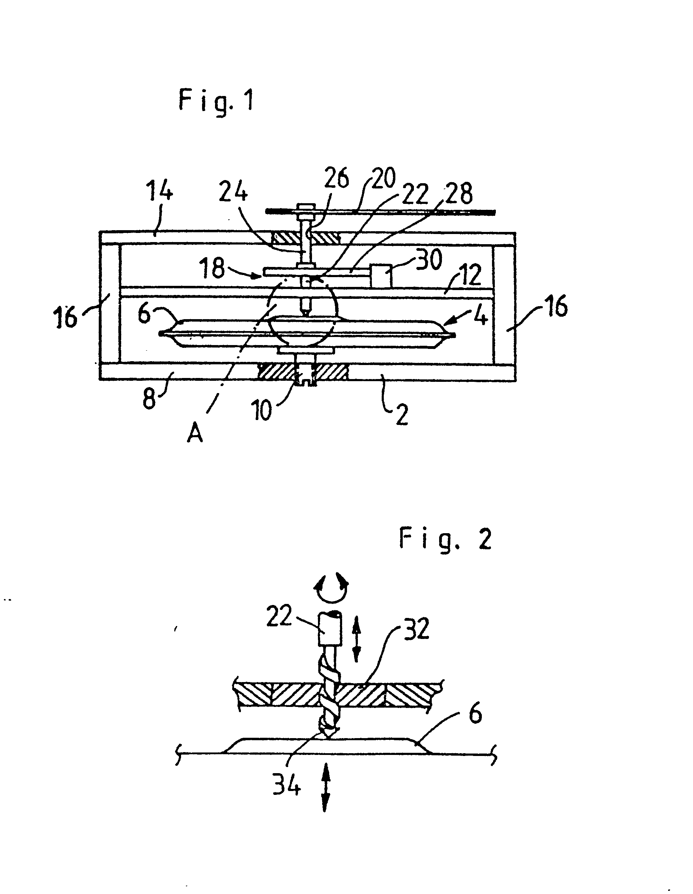

Fig. 1 zeigt ein Barometer in Seitenansicht, wobei allerdings dessen Gehäuse, Sichtscheibe und Ziffernblatt zur Vereinfachung der Darstellung und der Erläuterung weggelassen sind.

Das dargestellte Barometer umfaßt eine im wesentlichen kreisförmige Platine bzw. Grundplatte 2, die eine Membrankapsel 4 trägt. Die Membrankapsel 4 besteht aus einer in Fig. 1 oberen Metallmembran 6 sowie einer unteren Metallmembran 8, die an ihrem Rand luftdicht miteinander verbunden sind, und ist weitgehend evakuiert. Die beiden Metallmembrane 6 und 8 haben eine solche Vorspannung, daß die Membrankapsel 4 zu ihrer Stabilisierung keine Stützfeder benötigt, d.h. stabilisiert ist. An der unteren Metallmembran 8 ist in deren Mitte ein Gewindezapfen 10 befestigt, der in eine nicht bezifferte Gewindebohrung in der Grundplatte 2 geschraubt ist und an seinem freien Ende einen Schlitz zum Angriff eines geeigneten Werkzeuges, beispielsweise eines Schraubenziehers, aufweist. Durch Drehen des Gewindezapfens 10 in der ihm zugeordneten Gewindebohrung kann somit die Lage der Membrankapsel 4 relativ zur Grundplatte 2 eingestellt werden.

Parallel zur Grundplatte 2 verlaufen oberhalb derselben eine Zwischenplatine 12 sowie eine Platine 14, die durch Säulen 16 fest mit der Grundplatte 2 verbunden sind. Die Membrankapsel 4 ist mittig bezüglich der Grundplatte 2 angeordnet. Auf der von der Grundplatte 2 abgewandten Seite der Membrankapsel 4 ist ebenfalls mittig ein Übertragungswerk 18 angeordnet, das dazu dient, die Bewegung bzw. Auslenkung der Membrankapsel in Form einer Drehung zu einem Zeiger 20 zu übertragen, der oberhalb (in Fig. 1) der Platine 14 angeordnet ist. Das Übertragungswerk umfaßt eine Ausgangswelle 22, die senkrecht zur Membrankapsel 4 und mittig bezüglich derselben angeordnet ist. Die Ausgangswelle 22 ist einstückig ausgebildet mit einer koaxialen Zeigerwelle 24, die drehbar in der oberen Platine 14 mittels eines Lagers 26 gelagert ist, das eine Verschiebung der Zeigerwelle 24 in Axialrichtung relativ zur Platine 14 zuläßt. Mit ihrem in Fig. 1 oberen Ende ragt die Zeigerwelle 24 nach oben über die Platine 14 hinaus. Auf dieses obere Ende der Zeigerwelle 24 ist der Zeiger 20 drehfest aufgesetzt. An der Zeigerwelle 24 greift eine spiralförmige Rückstellfeder 28 an, die zwischen der Platine 14 und der Zwischenplatine 12 im wesentlichen parallel zu diesen angeordnet ist. Die Rückstellfeder 28 ist mit ihrem einen Ende an der Zeigerwelle 24 befestigt und an ihrem anderen Ende mittels eines Ansatzes 30 an der Zwischenplatine 12 gerätefest angebracht. Die Rückstellfeder 28 steht unter einer solchen Vorspannung, daß sie die Zeigerwelle 24 im Gegenuhrzeigersinn - bei Betrachtung des in Fig. 1 in Seitenansicht dargestellten Barometers von oben - zu drehen versucht.

Wie Fig. 2 zeigt, weist die Ausgangswelle 22 an ihrem unteren Ende ein Außengewinde in Form eines Trapezgewindes auf, das in Eingriff mit einem entsprechend ausgebildeten Innengewinde in einem schraubenförmigen Element 32 steht, das unbeweglich angeordnet ist. Das schraubenförmige Element 32 kann beispielsweise, wie dies beim dargestellten Ausführungsbeispiel der Fall ist, in die Zwischenplatine 12 eingesetzt und fest mit dieser verbunden sein. Am in Fig. 2 unteren Ende weist die Ausgangswelle 22 eine kegelige Spitze 34 auf, mit der die Ausgangswelle 22 unmittelbar in Anlage an der oberen Metallmembran 6 der Membrankapsel 4 steht. Aufgrund der Vorspannung der Rückstellfeder 28 wird die Spitze 34 ständig in dieser Anlage behalten.

Wenn sich die Membrankapsel 4 aufgrund einer Abnahme des Umgebungsdrucks etwas ausdehnt, wird dabei die obere Metallmembran 6 aus der in Fig. 2 dargestellten Lage etwas nach oben ausgelenkt. Dabei drückt sie von unten gegen die Spitze 34, so daß die Ausgangswelle 22 etwas nach oben in Fig. 2 verschoben wird, wobei diese translatorische Bewegung aufgrund des Eingriffs zwischen dem Innengewinde und dem Außengewinde an der Ausgangswelle 22 bzw. dem schraubenförmigen Element 32 zwangsläufig von einer Drehung der Ausgangswelle 22 begleitet ist. Aufgrund der einstückigen Ausbildung der Ausgangswelle 22 und der Zeigerwelle 24 wird diese Drehung unmittelbar zum Zeiger 20 übertragen. Wenn sich die obere Metallmembran 6 aufgrund einer Änderung des Umgebungsdrucks nach unten (in Fig. 2) bewegt, folgt die Spitze 34 der Ausgangswelle 22 dieser Bewegung, weil die Rückstellfeder 28 ein entsprechendes Drehmoment auf die Ausgangswelle 22 ausübt und die dadurch hervorgerufene Drehung aufgrund des Gewindeeingriffs zwischen dem Innengewinde und dem Außengewinde zwangsläufig von einer Axialverschiebung der Ausgangswelle 22 begleitet ist.

Wie sich aus der vorstehenden Beschreibung ergibt, ist die Einheit aus der Ausgangswelle 22 und der Zeigerwelle 24 radial an zwei Stellen gelagert, nämlich mittels des Lagers 26 und des schraubenförmigen Elementes 32. In Axialrichtung ist diese Einheit lediglich am schraubenförmigen Element 32 abgestützt, wobei aufgrund der Besonderheit des Eingriffs zwischen dem schraubenförmigen Element 32 und der Ausgangswelle 22 jedoch eine Axialverschiebung möglich ist, wenn gleichzeitig eine Drehung möglich ist. Die Ausbildung des Außengewindes der Ausgangswelle 22 und des Innengewindes des schraubenförmigen Elementes 32 sind derart gewählt, daß eine möglichst reibungsarme Relativbewegung möglich ist und daß der auftretenden Auslenkung der oberen Metallmembran 6 der gewünschte Ausschlag des Zeigers 20 zugeordnet ist.

Bei dem vorstehend beschriebenen Barometer sind die Ausgangswelle 22 und die Zeigerwelle 24 nicht nur drehbar sondern auch axial verschiebbar, was eine extrem einfache Ausbildung des Übertragungswerkes 1. ermöglicht. Die axiale Verschiebung der Zeigerwelle 24 und somit des Zeigers 20 relativ zur Platine 14 und somit auch zum nicht dargestellten Ziffernblatt beeinträchtigt die Ablesbarkeit praktisch nicht.

## Patentansprüche

1. Barometer mit einer Membrankapsel (4), einer drehbar gelagerten Zeigerwelle (24), einer Rückstellfeder (28) für die Zeigerwelle und einem Übertragungswerk, das eine drehbar gelagerte Ausgangswelle (22), die senkrecht zur Überfläche der Membrankapsel (4) verläuft und deren Drehung mit der der Zeigerwelle (24) gekoppelt ist, sowie ein schraubenförmiges Element (32) aufweist, wobei die translatorische Bewegung der Membrankapsel (4) durch Zusammenwirken zwischen dem schraubenförmigen Element (32) und der Ausgangswelle (22) in eine Drehbewegung der Ausgangswelle (22) umgewandelt wird, dadurch gekennzeichnet, daß das schraubenförmige Element (32) unbeweglich angeordnet ist, daß die Ausgangswelle (22) außer drehbar auch axial verschiebbar ist und daß die Ausgangswelle mit ihrem der Membrankapsel (4) zugewandten Ende an der Membrankapsel anliegt und von der Rückstellfeder (28) in dieser Anlage gehalten wird.

2. Barometer nach Anspruch 1, dadurch gekennzeichnet, daß die Ausgangswelle (22) und die Zeigerwelle (24) koaxial zueinander angeordnet und drehfest miteinander verbunden sind.

3. Barometer nach Anspruch 2, dadurch gekennzeichnet, daß die Ausgangswelle (22) und die Zeigerwelle (24) einstückig ausgebildet sind.

4. Barometer nach einem der Ansprüche 1 bis 3, dadurch gekennzeichnet, daß die Ausgangswelle (22) ein Außengewinde aufweist, das in Eingriff mit einem Innengewinde am schraubenförmigen Element (32) steht.

5. Barometer nach Anspruch 4, dadurch gekennzeichnet, daß das Innengewinde und das Außengewinde Trapezgewinde sind.

**Claims**

1. Barometer comprising a diagphragm box (4), a rotatably supported pointer shaft (24), a resetting spring (28) for said pointer shaft, and a transmitting mechanism including a rotatably supported output shaft (22) which extends perpendicularly to the surface of said diaphragm box (4) and the rotation of which is coupled with that of said pointer shaft (24), as well as a helical member (32), the translatory movement of said diaphragm box (4) being converted into a rotary movement of said output shaft (22) by the cooperation of said helical member (32) with said output shaft (22), characterized in that said helical member (32) is arranged in stationary manner, in that said output shaft (22) is rotatable and, in addition, axially displaceable, and in that the end of said output shaft facing said diaphragm box (4) rests against said diaphragm box and is held in this position by said resetting spring (28).

2. The barometer as claimed in claim 1, characterized in that said output shaft (22) and said pointer shaft (24) are arranged in coaxial relation to each other and are connected with each other so as to be rotated in unison.

3. The barometer as claimed in claim 2, characterized in that said output shaft (22) and said pointer shaft (24) are made in one piece.

4. The barometer as claimed in one of the claims 1 to 3, characterized in that said output shaft (22) has an external thread which engages with an internal thread of said helical member (32).

5. The barometer as claimed in claim 4, characterized in that said internal thread and said external thread are trapezoidal threads.

**Revendications**

1. Baromètre comprenant une capsule à membranes (4), un arbre à aiguille (24) monté de façon rotative, un ressort de rappel (28) destiné à l'arbre à aiguille et un mécanisme de transmission qui comprend un arbre de sortie (22) monté de façon rotative, disposé perpendiculairement à la surface de la capsule à membranes (4) et dont la rotation est couplées à. celle de l'arbre à aiguille (24), ainsi qu'un élément à forme hélicoïdale (32), le mouvement de translation de la capsule à membranes (4) étant transformé par coopération de l'élément à forme hélicoïdale (32) avec l'arbre de sortie (22) en un mouvement de rotation de l'arbre de sortie (22), caractérisé en ce que l'élément à forme hélicoïdale (32) est monté de façon immobile, en ce que l'arbre de sortie (22) peut non seulement tourner mais peut également se déplacer en direction axiale, et en ce que l'arbre de sortie s'appuie par son extrémité qui est tournée vers la capsule à membranes (4) sur ladite capsule à membranes et est maintenu dans cette position par le ressort de rappel (28).

2. Baromètre selon la revendication 1, caractérisé en ce que l'arbre de sortie (22) et l'arbre à aiguille (24) sont montés coaxialement l'un par rapport à l'autre et sont reliés l'un à l'autre en étant bloqués en rotation.

3. Baromètre selon la revendication 2, caractérisé en ce que l'arbre de sortie (22) et l'arbre à aiguille (24) sont constitués d'un seul tenant.

4. Baromètre selon l'une quelconque des revendications 1 à 3, caractérisé en ce que l'arbre de sortie (22) comprend un filetage externe qui est en prise avec un filetage interne de l'élément à forme hélicoïdale (32).

5. Baromètre selon la revendication 4, caractérisé en ce que le, filetage interne et le filetage externe sont des filetages de forme trapézoïdale.

# Fig. 1

# Fig. 2